# EUROPEAN PATENT SPECIFICATION

(11) **EP 3 928 387 B1**
(45) Date of publication and mention of the grant of the patent: **05.06.2024**
(21) Application number: 20729861.3
(22) Date of filing: 04.04.2020
(51) Int. Cl.: H01S 3/10, H01S 3/102, H01S 3/067, H01S 3/0941, H01S 3/094, H01S 3/16

(54) **A SIMPLE LASER WITH AN IMPROVED PUMP SYSTEM FOR GENERATING LASER PULSES ON DEMAND**
EINFACHER LASER MIT VERBESSERTEM PUMPSYSTEM ZUR ERZEUGUNG VON LASERPULSEN AUF ANFRAGE
LASER SIMPLE DOTÉ D'UN SYSTÈME DE POMPE AMÉLIORÉ POUR GÉNÉRER DES IMPULSIONS LASER À LA DEMANDE

(30) Priority: 05.04.2019 SI 201900071
(43) Date of publication of application: 29.12.2021
(73) Proprietor: Optotek d.o.o., 4210 Brnik - Aerodorm (SI)
(72) Inventor: AGREZ, Vid, 1000 Ljubljana (SI); PETELIN, Jaka, 1000 Ljubljana (SI); PETKOVSEK, Rok, 1000 Ljubljana (SI); VRECKO, Andrej, 1000 Ljubljana (SI)
(74) Representative: Patentni Biro AF d.o.o.
(86) International application number: PCT/SI2020/050011
(87) International publication number: WO 2020/204839

(56) References cited:
- US-A1- 2006 176 913
- US-A1- 2012 069 860
- US-A1- 2016 099 538
- FUYONG WANG: "Stable pulse generation in bias pumped gain-switched fiber laser", ARXIV.ORG, CORNELL UNIVERSITY LIBRARY, 201 OLIN LIBRARY CORNELL UNIVERSITY ITHACA, NY 14853, 8 October 2014 (2014-10-08), XP081363856, DOI: 10.1364/JOSAB.35.000231
- YULONG TANG ET AL: "Hybrid-Pumped Gain-Switched Narrow-Band Thulium Fiber Laser", APPLIED PHYSICS EXPRESS, vol. 5, no. 7, 28 June 2012 (2012-06-28), page 072702, XP055716756, JP ISSN: 1882-0778, DOI: 10.1143/APEX.5.072702
- JAKA PETELIN ET AL: "Short pulsed gain-switched fiber laser with improved efficiency utilizing unabsorbed pump recovery", OPTICS EXPRESS, vol. 22, no. 17, 19 August 2014 (2014-08-19), page 20588, XP055717096, DOI: 10.1364/OE.22.020588
- V AGREZ ET AL: "Effect of repetition rate on gain-switched fiber laser output pulses", LASER PHYSICS, vol. 24, no. 10, 1 August 2014 (2014-08-01), page 105108, XP055717107, RU ISSN: 1054-660X, DOI: 10.1088/1054-660X/24/10/105108
- ROK PETKOVSEK ET AL: "Pulses on Demand in Fibre and Hybrid Lasers", STROJNISKI VESTNIK - JOURNAL OF MECHANICAL ENGINEERING, vol. 65, no. 11-12, 18 November 2019 (2019-11-18), pages 680-689, XP055717084, SI ISSN: 0039-2480, DOI: 10.5545/sv-jme.2019.6352

## Description

### Field of the invention

The present invention belongs to the field of laser devices for generation, multiplication, modulation or altering repetition frequencies with the help of stimulated emitted light waves, more precisely to the field of constructional details of laser devices and laser devices for controlling intensity, frequency, length, polarization or direction of emitted rays. The present inventions is an improved gain switched fiber laser, which enables changes of repetition frequency in a large range and at the same time maintains a constant peak power and duration of generated laser pulses.

### Background of the invention and the technical problem

Current-day laser-based processing systems and methods exhibit a need for adaptable laser sources, which are able to generate laser pulses on demand with a controlled power and duration. This increases the adaptability of the system, while it at the same time decreases the number of components and the complexity of a scanning head, thus enabling work at higher frequencies in the case of processing systems. One possible example of a fast scanning head is realised with a polygonal scanner, which has an advantage of very high movement speed of the laser beam along the workpiece, wherein the movement speed cannot be adjusted as quickly as required. An arbitrary pattern produced by the laser beam can be achieved only by changing the delay between laser pulses. Another example is a resonant scanner, which has a non-linear response causing nonlinear relation between laser beam position and time. To write an arbitrary pattern an adaptable laser source is again required in this case.

Pulsed laser sources are known for their good operation at constant repetition frequency, while a change in the latter usually leads to deviation in amplitude and width of the generated laser pulse, which is not acceptable for the majority of applications. Commonly used solutions for ensuring pulses on demand are usually complex and comprise additional components, such as output light modulators, additional seed diodes, etc... These components increase the overall price of the laser and in some cases are not suitable for lasers with output power of several 100 W.

One of the methods for generating laser pulses with a duration around a few tens of nanoseconds is gain switching. This is a method, where a laser pulse represents the first relaxation oscillation when pulse pumping the laser medium. Such lasers, except pump modules, do not need any additional components for achieving pulsed operation and represents a well-founded basis for an industrial laser able to generate pulses on demand. Gain switching of active fiber lasers has been described for active fibers doped with neodymium (Zenteno et al., Opt. Lett. 14(13), 671-673). This article discloses a connection between duration of the pump pulse and the generated laser pulse via a period of relaxation oscillations. In addition, it has been shown that for generation of short pulses (duration around a few tens of nanoseconds) a short oscillator is needed, which consequently decreases the output power of the laser. This problem is solved with an additional amplification stage, but this further increases the dependency of laser pulses on repetition frequency. The increased dependency in this case is a result of larger differences in the pumped upper laser level along the active fiber, which forms the oscillator and the amplifier. In pulsed pumping the oscillator makes up for the losses incurred by spontaneous emission between laser pulses sooner than the amplifier.

The technical problem, which is solved by the present invention, is a design of a compact laser system based on gain switching without any additional optical elements, such as for example an acoustic-optical modulator, along the laser chain. The compact laser system being able to generate pulses at arbitrary times, wherein the peak power and duration of the so generated pulses remain constant. At the same time, it is the aim of the invention to maintain robustness and compact design with low complexity of manufacture. The invention has to be suitable for integration into different laser devices and has to enable simple use in various laser procedures, where pulses on demand are required. Among these, laser micro-structuring methods have to be mentioned, where fast scanners with laser pulses produce an arbitrary pattern with the aim of material removal or change in material structure and/or colour. Robust lasers for generation of pulses on demand also have an added value in the field of distance measurement, in medicine for excitation of photosensitive structures and elsewhere.

### State of the art

Generating pulses with pulsed pumping of the active medium, so called gain switching, is well-studied and described in the literature. Articles by Petkovsek and Agrez (Opt. Express 22(2), 1366-1371 (2014)) and Larsen et al. (Opt. Express 22(2), 1490-1499 (2014)) disclose that a short oscillator has to be used in order to ensure short laser pulses with duration of a few tens of nanoseconds. The influence of other parameters such as laser wavelength, the ratio between the active and the passive part of the fiber resonator, the diameter of the active core, etc., is also well studied. The first gain switched lasers had problems with pulse stability, even if they operated at constant repetition.

A stable gain switched fiber laser comprising only an oscillator, which is based on active fiber doped with thulium, for generating pulses with duration of 10 ns has been described in patent US7787506. Different designs of exclusively fiber based embodiment of oscillator for gain switching have been described in document US2012069860. The latter does not mention generation of pulses on demand, but rather relates to speeding up generation of laser pulses, which is not connected with the technical problem of ensuring constant pulses at arbitrary times, which is solved by the present invention. The use of a laser system together with an oscillator for generating a super-continuum has been described in patent application EP20100811307. This document is the first to suggest that additional active fiber functioning as the amplifier and pumped with unabsorbed pump light from the oscillator may solve the low efficiency of short oscillators. This has been shown and discussed in the article by Petelin et al. (Opt. Express 22(17), 20588-20594 (2014)), while the device with reabsorption of the pump light has been later disclosed in document US20160099538A1. Providing an additional active fiber to the pulsedpumped oscillator while retaining the optical connection for the pump light has been shown to enable higher peak powers and short pulses without the need to increase system complexity and costs.

All above-described solutions exhibit problems in ensuring constant parameters of laser pulses (duration and peak power) when the frequency of the laser operation is altered. A person skilled in the art of lasers knows that gain switched lasers generating individual pulses have the first pulse longer and with lower peak power as the following pulses in the pulse train at the same pumping conditions. This phenomenon could not be avoided until now, even if longer or stronger pump pulses were used. The additional amplifying fiber increases the efficiency of the laser, but the stability of laser pulse parameters decreases significantly and can change by a factor of 2 or more depending on the repetition frequency.

Other known gain-switched lasers for generating laser pulses are disclosed in FUYONG WANG: "Stable pulse generation in bias pumped gain-switched fiber laser",ARXIV.ORG, CORNELL UNIVERSITY LIBRARY, 201 OLIN LIBRARY CORNELL UNIVERSITY ITHACA, NY 14853, 8 October 2014, and
YULONG TANG ET AL: "Hybrid-Pumped Gain-Switched Narrow-Band Thulium Fiber Laser",APPLIED PHYSICS EXPRESS, vol. 5, no. 7, 28 June 2012.

### Description of the solution of the technical problem

The invention relates to a gain-switched laser as defined in independent claim 1 or 12, and to a method for generating laser pulses as defined in independent claim 13. Preferred embodiments of the invention are defined in the dependent claims.

The essence of the simple laser with improved pump system according to the invention is in that the laser can generate laser pulses with fixed parameters regardless of operation frequency at increased efficiency, wherein the said laser comprises:
- an active element installed between two reflective elements, all said elements forming an oscillator for generating laser pulses,
- a pump system having an output, which is coupled or spliced to the oscillator and pumps the oscillator and an amplifier,
   wherein the pump system comprises control electronics, a primary and a secondary pump module and a beam combiner, whereas the primary and secondary pump module each comprises at least one pump laser diode, and wherein the primary pump module generates short pump pulses, with a preferred duration up to 10 µs, more preferred from 10 ns to 2 µs, typically from 200 ns to 2µs, with peak power from 10 W and up, preferably from 100 W and up, typically few 100 W, while the secondary module operates at low average power, preferably from 0.1 W to 10 W, even more preferably 1 W, typically few W, and
- on the other side of the oscillator a second active element, which serves as the amplifier pumped by the pump light transmitted through the oscillator, thereby ensuring optimal efficiency of the laser.

The pump modules comprise one or more laser diodes with their wavelength corresponding to the absorption peaks of the active material. The active element may be a fiber or a non-fiber element such as a crystal rod, preferably doped with ytterbium, whereas the dopant may also be any other suitable dopant of rare earths such as neodymium, erbium, thulium, holmium, samarium, in order to satisfy the need of operation at different wavelengths of the laser light. The amplifier is preferably doped with the same dopant as the oscillator. The number of pump laser diodes of the primary module depends on the required peak power of the laser, wherein one pump laser diode usually suffices for the secondary module. An important difference between the pump modules according to the invention is the range of pumping power. The primary module, with regards to the control current, generates short pump pulses, preferably with duration from 200 ns to 2 µs, with peak power from few 10 W and up, typically 100 W or few 100 W, wherein the laser is designed in such a way that the energy of the pump pulses is transferred to the generated laser pulse via energy transitions in the active medium. The secondary module operates at low pump power, preferably from 0.1 W do 10 W, typically 1 W or few W, wherein its output may be modulated or continuous, depending on the required type of individual laser pulse parameter control. The power, which is generated by the secondary module, is directly used for minimalizing the effect of active medium relaxation via spontaneous emission between laser pulses.

Consequently, the two pump modules of the pump system according to the invention can switch between very high output pumping power (few 100 W) needed for laser pulse generation and low power (few W) between strong pump pulses, thus achieving a large contrast of pumping ratio, which enables optimal laser operation. Thus, improved gain switching technique enables generation of short laser pulses in the described oscillator-amplifier system and at the same time very reliably defines the lowest level of the population inversion that is reached after the laser pulse and maintains said value. In the least complex embodiment of the invention, wherein the pump system between high pulses operates in a continuous mode at low power, the secondary module ensures predefined amount of power needed to maintain a sufficient population of the upper laser level, wherein with changes of repetition frequencies smaller variations in population inversion occur. In the advanced mode, fluorescence intensity of the excited active medium is measured and used to adjust the pumping power of the secondary module, so as to ensure repeatable conditions before the generation of the pulse. The advanced embodiment of the invention is realized with a photodiode installed on the side of the active element, which tracks the intensity of the transmitted spontaneous emission in time. Control electronics are further arranged to comprise a circuit for high sensitivity measurement in a lock-in approach and can thus adjust the level of pumping between each pair of subsequent pulses. In this operation mode of the gain switched laser according to the invention tracking of the laser pulse evolution at the laser output for ensuring stable operation is not needed, which may in turn decrease the number of elements on the laser output.

The pump system further comprises control electronics and a beam combiner (BC). The latter may be built in any suitable way, using for example fiber technology or free-space optics. The control electronics comprises inputs for control signals, an input for a signal coming from a photodiode, which tracks the growth of the optical pulse and on the basis of which time modulation of current to the primary and secondary pump module can be determined, as well as two current outputs for the primary and secondary pump module.

Reflective elements may be fiber Bragg gratings (FBG), wherein the FBG with high reflectivity above 90% is installed between the pump system and the oscillator, while the grating with lower reflectivity is installed between the active fiber of the oscillator and the active fiber of the amplifier. The invention could also be realized with free-space optical elements, where the FBG are replaced with dichroic mirrors. The requirement for the reflective elements forming the oscillator is that they retain the optical connection between the oscillator and the amplifier for the pump light. The laser according to the invention may have other components, for example it may be equipped with polarization maintaining fibers and/or single polarization optical elements.

Laser system constructed in the said manner is able to generate any sequence of laser pulses with minimum deviations in their duration and peak power from the average value. The sequence may follow the pre-loaded sequence on the control electronics processor or the pulses may be generated based on a trigger signal, which is in some embodiments generated by the processing device itself. The trigger signal may be a digital or an analogue electric signal generated in the response to the detected event in the laser application/use. The laser is prepared for pulse on demand operation by turning on the secondary pump module, which pumps the active part of the laser continuously (in the simple embodiment of the invention) or in a modulated manner for advanced operation with a lock-in approach so that the threshold for relaxation oscillation is not exceeded. When the control electronics receive the trigger signal, the primary pump module is turned on, which causes a quick rise of the population inversion and emitted laser pulse as a consequence of relaxation oscillation. The primary module turns off the pumping so that it suppresses secondary relaxation oscillations in the system, wherein the secondary module continues to pump the system at lower power and prevents additional losses to population inversion caused by spontaneous emission. In case of upgraded lock-in approach for measuring the pumped state of the of the upper laser level, the secondary pump module may increase or decrease the pump power in order to achieve the optimal value of the population inversion before request for a new laser pulse and the primary pump module is turned on again. The described laser operation mode enables generation of laser pulses on demand.

The described simple pulsed laser has been described in a preferred embodiment of a gain switched fiber laser comprising the oscillator and the additional amplifier, as the advantages of the invention are most obvious in this execution. However, it is certainly possible to use the described pump system with an increased dynamic range of pumping in other embodiments of laser oscillators generating pulses on demand further amplified in additional active medium.

The simple laser for generating laser pulses on demand according to the invention will be described in further detail on the basis of exemplary embodiments and figures, which show:
- Figure 1: Schematic view of the simple laser for generating pulses on demand, which shows all key components and is represented by an exemplary embodiment of a monolithic all fiber laser, which does not exclude embodiments with free-space elements.
- Figure 2: Schematic view of the pump system, which is an integral part of the simple laser for generating pulses on demand.
- Figure 3: Comparison of operation of the gain switched pulsed laser system in known embodiments of generating pulses on demand (top) and in case of use of the pump system and the pumping method according to the invention (bottom).
- Figure 4: Comparison of the upper laser level population at two different repetition frequencies in dependency on time for known laser sources (top) and in the laser source according to the invention (bottom). The secondary pump module in the invention ensures constant population level between laser pulses.
- Figure 5: Comparison of duration of primary pump pulses (top) and peak power (bottom) of the output laser pulses in dependence on repetition frequency. Squares represent the response without and dots with the use of solutions according to the invention.

In the scope of the invention other embodiments of the lasers clear to the skilled person in the art of laser technology are possible, the scope of the invention being defined in the claims. In a possible embodiment of low peak power laser system according to the invention, which needs a smaller range of pumping power, it would be possible to use only one pump module functioning as a primary as well as a secondary pump module as described above. This means that only one pump laser diode is used, operated to emit high pump power pulses and in between them modulated with a frequency necessary for measuring fluorescence in a lock-in approach. Furthermore, the pump system having a large dynamic range may be used in optical pumping of other laser types, such as semiconductor lasers.

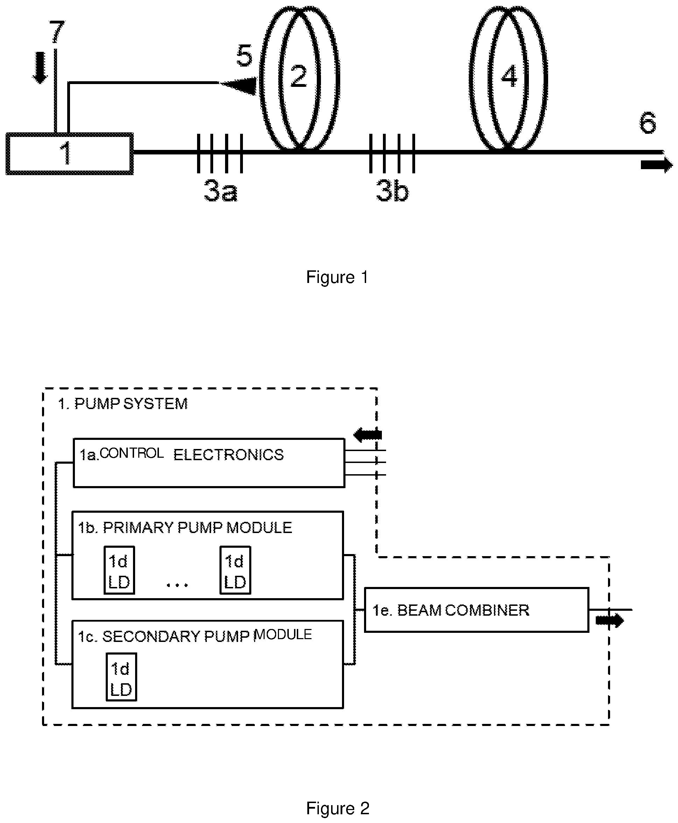

Figure 1 shows a scheme of a preferred embodiment of the simple laser for pulse on demand generation, wherein the laser is designed as a monolithic all fiber laser, however this does not exclude embodiments with free-space elements. The laser according to the first embodiment comprises a pump system 1, which is optically coupled to an active fiber of an oscillator 2, a first fiber Bragg grating 3a with high reflectivity, which is installed between the pump system and the active fiber of the oscillator, a second fiber Bragg grating 3b of an additional amplifier 4, a measuring photodiode 5 for measuring in a lock-in approach, an output 6 from the laser and an electric input 7 for control and triggering signals. Operation of the first embodiment is the same as described above. The presented design of the laser enables efficient use of the pump light, as the length of the amplifier 4 is chosen in a manner which allows absorption of all transmitted light from the oscillator 2. The length of the latter may be adjusted to generation of laser pulses with duration tailored to the selected final application.

Figure 2 further shows key elements of the pump system of the simple laser with pulses on demand. The system thus comprises: control electronics 1a, which are used to set the electrical current for controlling the primary pump module 1b and the secondary pump module 1c. Both pump modules comprise one or more pump laser diodes 1d (LD) with their optical outputs coupled via a beam combiner 1e. Operation of the laser depends on the shape of the pump light emitted at the output of the pump system 1. Laser pulses are generated as a consequence of pump pulses with high power and subsequent fast increase in population of the upper laser level according to the gain switching principle. For ensuring pulses on demand the pump system 1 enables additional functionality. In the simplified embodiment of the invention, the pump system 1 ensures low power continued pumping power between high pump pulses. This power is calibrated to the range of repetition frequencies to be used and physical properties of the laser system, such as the length of the active medium, its cross-section and its dopant. In the advanced mode, which ensures high stability of laser pulses on demand the control electronics 1a modulates in time the pump power between the high pump pulses and adjusts its peak power according to the feedback signal from the photodiode 5.

The primary 1b and the secondary 1c pump modules may have one or more pump laser diodes 1d, wherein the pump laser diodes of both modules emit light at the same wavelength or the wavelengths differ in such manner to cover different absorption peaks of the active medium.

According to a possible embodiment of the invention, wherein Ytterbium active fibers are used, it is beneficial to pump with a combination of different wavelengths. The primary pump module ensures light with a wavelength around the absorption peak at 976 nm and the secondary pump module ensures light with a wavelength around the absorption peak at 920 nm. The advantage of this embodiment is a more favourable distribution of the absorbed power along the laser system, wherein the primary module deposits more pumping power in the short active fiber of the oscillator, while the pumping power of the secondary pump module is more equally distributed between the oscillator and the amplifier due to lower absorption. It is obvious to the person skilled in the art of pumping Ytterbium doped active fibers that absorption of the pump light depends on its wavelength, which consequently means that other combinations of pump light wavelengths may be chosen and the same effect may be achieved by tuning the ratio of absorption coefficients.

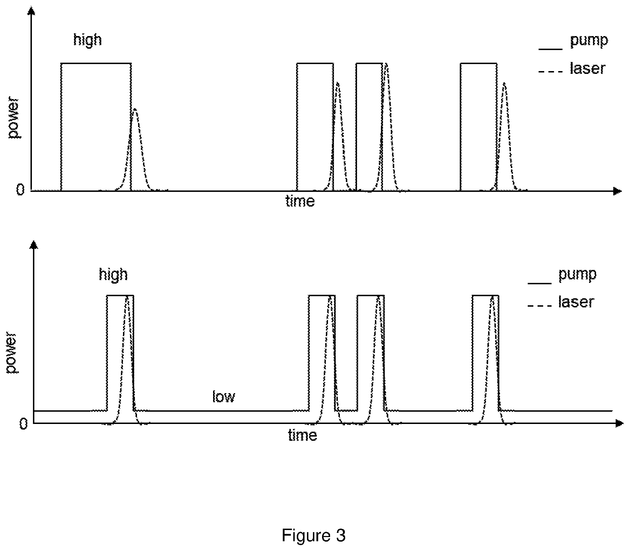

Figure 3 shows a comparison of pulsed gain switched laser operation. Such lasers exhibit stable operation at constant repetition frequency. In case of different time delays between laser pulses and in the case of switching on the laser, variations in the pulse duration and peak power occur. The figure obviously shows that the first pulse has longer duration and lower power than the rest of pulses. The bottom part of figure 1 shows operation of the gain switched laser, wherein the above described pumping capable of a large dynamic range and switching between pump pulses with high power and low power between laser pulses is used. This eliminates variations of the output laser pulse parameters, as all pulses have the same duration and peak power, which is the aim of this invention.

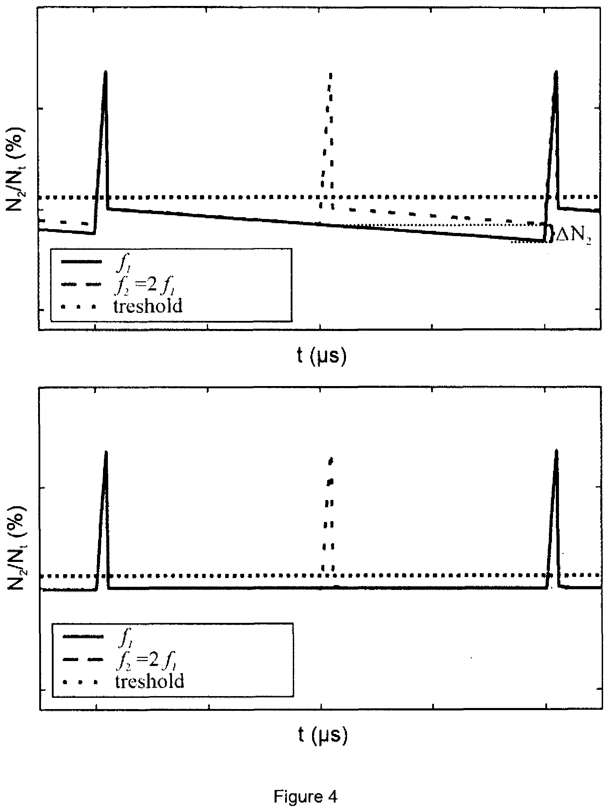

Figure 4 shows a comparison of the upper laser level population depending on time during generation of a laser pulse with a gain switched laser. Two repetition frequencies are shown, wherein the dashed line represents occupancy of the upper laser level at two times higher repetition frequency. This figure also shows that between individual oscillations and consequently emitted laser pulses the inversion population is lower. This is due to the spontaneous emission, as between laser pulses the system is below the threshold for stimulated operation. For gain switched system operating at repetition frequencies lower than 10 kHz or operating in the single shot regime, the effect of spontaneous emission on the output power and duration of laser pulses is significant. The bottom part of figure 4 shows the upper laser level population in case the pumping is performed with the above-described pump system according to the invention.

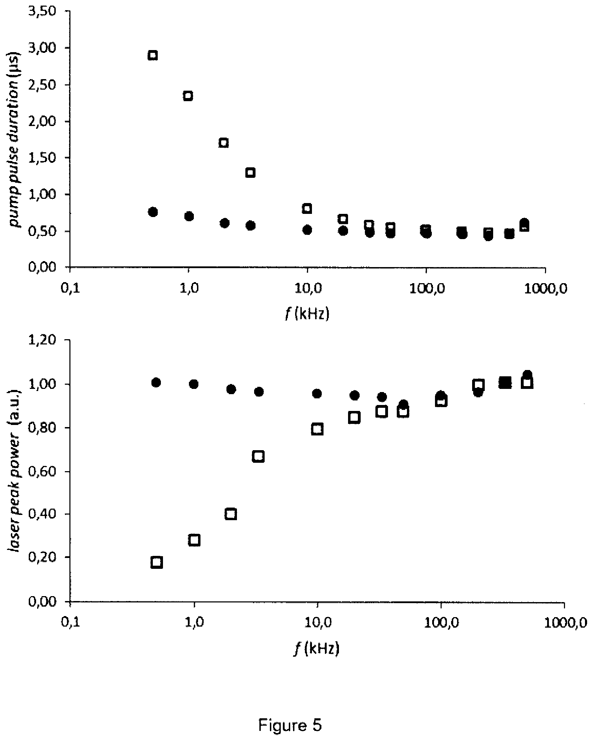

Further, figure 5 shows measurements of primary pump pulse duration and output laser pulse peak power dependence on repetition frequency. Squares represent the response without and dots with the use of solutions according to the invention. This figure shows that the peak power of laser pulses decreases with lowering repetition frequency, while the optimal duration of pump pulse increases. Despite this the longer pump pulse cannot compensate unbalanced pumped condition caused by the spontaneous emission along the active fiber of the oscillator and the amplifier. By using the present invention almost constant output peak power with minimal increase of the pump pulse duration is achieved.

The simple laser with improved pump system thus reliably ensures constant pulses generated at arbitrary times, wherein the number of laser components is kept low, thus ensuring the price of the described laser lower in comparison to known, more complex solutions of the technical problem. The laser according to the invention may be integrated into various systems or may be used in applications where pulses on demand with constant duration and peak power are desired. Additionally, the laser source enables tuning the peak power of laser pulses for adjustment to requirements of each application.

## Claims

1. A gain-switched laser with pump system, wherein said laser is configured to generate laser pulses on demand at arbitrary repetition frequency, said generated pulses having constant duration and peak power, wherein the said laser comprises:
- a first active element (2) installed between two reflective elements (3a,3b), thereby forming an oscillator for generating laser pulses,
- a pump system (1) having an output, which is coupled or spliced to a first side of the oscillator and is configured to pump the oscillator and an amplifier,
wherein the pump system comprises control electronics, a primary and a secondary pump module and a beam combiner, said primary and secondary pump module each comprises at least one pump laser diode, and
wherein the primary pump module is arranged to generate short pump pulses with a duration up to 10 µs, and the output power of the secondary pump module is arranged to be continuous or modulated depending on the required control of the laser pulse parameters, and in either case the primary and the secondary module are arranged to operate at different peak powers, said secondary module being arranged to operate at lower peak power than the primary module
wherein the power generated by the secondary module is configured to ensure constant population inversion level of the laser oscillator active medium between laser pulses so as to decrease the effect of active medium relaxation caused by spontaneous emission between laser pulses, and
- on a second side of the oscillator a second active element (4), which serves as the amplifier, is configured for absorbing residual pump light transmitted through the oscillator.

2. The with pump system according to claim 1, **characterized in that** the primary module based on control current generates the short pump pulses with peak power from 10 W and up, wherein the energy of the short pump pulses is transferred with energy transitions in the active medium to the generated laser pulse; that the secondary module operates at low average power from 0,1 W to 10 W, wherein the output of the secondary module may be continuous or modulated depending on the required control of the laser pulse parameters, while the generated power of the secondary module is used for decreasing the effect of active medium relaxation caused by spontaneous emission between laser pulses; and **in that** consequently the pump system with both modules can switch between a high pump power generating a laser pulse and a low pump power after said laser pulse is generated.

3. The laser with pump system according to claim 1 or 2 **characterized in that** each of the pump modules comprises one or more pump laser diodes with a wavelength corresponding to absorption peaks of the active medium, wherein the pump laser diodes of both modules may emit light at the same wavelength or at different wavelengths in order to cover different absorption peaks of the active medium.

4. The laser with pump system according to any of the preceding claims, **characterized in that** the number of pump laser diodes of the primary module depends on the required output power of the laser, wherein the preferred choice is one pump laser diode in the secondary module and one or more pump laser diodes in the primary module.

5. The laser with pump system according to any of the preceding claims, **characterized in that** the first active element is an optic fiber or a non-fiber element such as a crystal rod.

6. The laser with pump system according to any of the preceding claims, **characterized in that** the active medium present in the first active element is doped with a rare earth dopant such as ytterbium, neodymium, erbium, thulium, holmium, samarium, wherein the preferred dopant is ytterbium.

7. The laser with pump system according to claim 6, **characterized in that** the dopant is ytterbium and the primary pump module emits light with a wavelength around the absorption peak at 976 nm, while the secondary module emits light with a wavelength around the absorption peak at 920 nm.

8. The laser with pump system according to any of the preceding claims, **characterized in that** the control electronics of the pump system comprises inputs for control signals and optionally an input for a photodiode signal, which is configured to track growth of the generated laser pulse, and two current outputs for the primary and secondary pump modules.

9. The laser with pump system according to any of the preceding claims, **characterized in that** the secondary pump module is arranged to operate in-between pump pulses in a continuous mode at low power from 0,1 W to 10 W.

10. The laser with pump system according to any of the preceding claims from 1 to 8, **characterized in that** the secondary pump module is modulated, the said laser having a photodiode (5) and electronics with circuit for high sensitivity measurement in a lock-in approach, the photodiode being coupled from a side of the first active element, thereby allowing monitoring of the intensity of the transmitted spontaneous emission in time and thus allowing adjustment of the pumping power from the secondary module to ensure repeatable conditions before the laser pulse is generated.

11. The laser with pump system according to any of the preceding claims, **characterized in that** said reflective elements are dichroic mirrors or into an active laser fiber written first and second fiber Bragg gratings, wherein the first fiber Bragg grating (3a) is a grating with high reflectivity above 90% installed between the pump system and the oscillator while the second fiber Bragg grating (3b) is a grating with lower reflectivity installed between an active fiber of the oscillator and an active fiber of the amplifier.

12. A gain-switched laser with pump system, wherein said laser is configured to generate laser pulses on demand at arbitrary repetition frequency, said generated pulses having constant duration and peak power, wherein the said laser comprises:
- an active element (2) installed between two reflective elements (3a,3b) thereby forming an oscillator for generating laser pulses,
- one single pump module (1) having an output which is coupled or spliced to one side of the oscillator and which is configured for pumping the oscillator,
- an additional active element (4) on the other side of the oscillator, the additional active element functioning as an amplifier for absorbing residual pump light from said pump module transmitted through the oscillator, which ensures optimum efficiency of the laser,
- wherein said pump module comprises control electronics, and
- said pump module is configured to generate an output power which is, between pump pulses with high peak power, modulated with a frequency needed for fluorescence measurement in a lock-in approach to a low peak pump power which is lower than said high peak pump power after each said laser pulse is generated, said pump module comprising at least one pump laser diode, wherein the modulated low peak pump power is configured to ensure constant population inversion level of the laser oscillator active medium between the generated laser pulses so as to decrease the effect of active medium relaxation caused by spontaneous emission between laser pulses.

13. A method for generating laser pulses with constant duration and peak power at arbitrary frequency using the laser according to any claim from 1 to 11, wherein the method comprises the following steps:
- a) the laser pulses are generated based on a trigger signal (7) or based on a pre-defined required sequence, wherein the trigger signal is a digital or analogue electrical signal;
- b) the laser is prepared for arbitrary generation of pulses by turning on the secondary pump module, which pumps the active medium of the laser in a continuous mode or in a modulated mode with lock-in approach measurement, in order to prevent exceeding the threshold for laser operation;
- c) when the control electronics receives the trigger signal, the primary pump module is turned on, which causes a significant increase of population inversion in the laser and generates a laser pulse as a consequence of the relaxation oscillation;
- d) the primary module turns off the pumping to suppress secondary relaxation oscillations in the system, wherein the secondary module continues with pumping the system as in step b) and prevents additional loss to population inversion caused by spontaneous emission;
- by repeating the steps c) and d) the laser pulses on demand can be generated at arbitrary times.

14. The method for generating laser pulses according to claim 13, when using the laser according to claim 10 or when using the laser according to claim 11 when dependent on claim 10, wherein said control electronics modulate pumping power of the secondary pump module in-between the higher peak power pump pulses of the primary pump module and adjust the peak value of the modulated power of the secondary pump module based on the signal provided by the photodiode (5).

## Patentansprüche

1. Verstärkungsgeschalteter Laser mit Pumpsystem, wobei der Laser konfiguriert ist, um auf Anfrage Laserpulse mit beliebiger Wiederholungsfrequenz zu erzeugen, wobei die erzeugten Impulse eine konstante Dauer und Spitzenleistung aufweisen, wobei der Laser Folgendes umfasst:
- ein erstes aktives Element (2), das zwischen zwei reflektierenden Elementen (3a, 3b) installiert ist und dadurch einen Oszillator zum Erzeugen von Laserpulsen bildet,
- ein Pumpsystem (1) mit einem Ausgang, der mit einer ersten Seite des Oszillators gekoppelt oder gespleißt ist und zum Pumpen des Oszillators und eines Verstärkers konfiguriert ist,
wobei das Pumpsystem Steuerelektronik, ein primäres und ein sekundäres Pumpmodul und einen Strahlkombinierer umfasst, wobei das primäre und sekundäre Pumpmodul jeweils mindestens eine Pumplaserdiode umfassen, und
wobei das primäre Pumpmodul angeordnet ist, um kurze Pumpimpulse mit einer Dauer von bis zu 10 µs zu erzeugen, und die Ausgangsleistung des sekundären Pumpmoduls angeordnet ist, um abhängig von der erforderlichen Steuerung der Laserpulsparameter kontinuierlich oder moduliert zu sein, und in beiden Fällen das primäre und das sekundäre Modul für den Betrieb mit unterschiedlichen Spitzenleistungen ausgelegt sind, wobei das sekundäre Modul für den Betrieb mit niedrigerer Spitzenleistung als das primäre Modul ausgelegt ist,
wobei die vom sekundären Modul erzeugte Leistung konfiguriert ist, um zwischen Laserpulsen einen konstanten Populationsgrad des aktiven Mediums des Laseroszillators zu gewährleisten, sodass die Wirkung der Relaxation des aktiven Mediums, die durch spontane Emission zwischen Laserpulsen verursacht wird, verringert wird, und
- auf einer zweiten Seite des Oszillators ein zweites aktives Element (4), das als Verstärker dient und zum Absorbieren von restlichem Pumplicht, das durch den Oszillator übertragen wird, konfiguriert ist.

2. Laser mit Pumpsystem nach Anspruch 1, **dadurch gekennzeichnet, dass** das primäre Modul auf Steuerstrombasis die kurzen Pumpimpulse mit Spitzenleistung ab 10 W erzeugt, wobei die Energie der kurzen Pumpimpulse mit Energieübergängen in dem aktiven Medium zum erzeugten Laserpuls übertragen wird; dass das sekundäre Modul mit einer niedrigen Durchschnittsleistung von 0,1 W bis 10 W arbeitet, wobei die Ausgabe des sekundären Moduls abhängig von der erforderlichen Steuerung der Laserpulsparameter kontinuierlich oder moduliert sein kann, während die erzeugte Leistung des sekundären Moduls zur Verringerung der Wirkung der Relaxation des aktiven Mediums verwendet wird, die durch spontane Emission zwischen Laserpulsen verursacht wird; und dass in der Folge das Pumpsystem mit beiden Modulen zwischen einer hohen Pumpleistung zum Erzeugen eines Laserpulses und einer niedrigen Pumpleistung nach der Erzeugung des Laserpulses umschalten kann.

3. Laser mit Pumpsystem nach Anspruch 1 oder 2, **dadurch gekennzeichnet, dass** jedes der Pumpmodule eine oder mehrere Pumplaserdioden mit einer Wellenlänge umfasst, die den Absorptionsspitzen des aktiven Mediums entsprechen, wobei die Pumplaserdioden beider Module Licht mit gleicher Wellenlänge oder mit unterschiedlichen Wellenlängen emittieren können, um unterschiedliche Absorptionsspitzen des aktiven Mediums abzudecken.

4. Laser mit Pumpsystem nach einem der vorstehenden Ansprüche, **dadurch gekennzeichnet, dass** die Anzahl der Pumplaserdioden des primären Moduls von der erforderlichen Ausgangsleistung des Lasers abhängt, wobei die bevorzugte Wahl eine Pumplaserdiode im sekundären Modul und eine oder mehrere Pumplaserdioden im primären Modul ist.

5. Laser mit Pumpsystem nach einem der vorstehenden Ansprüche, **dadurch gekennzeichnet, dass** das erste aktive Element eine optische Faser oder ein Nicht-Faserelement wie ein Kristallstab ist.

6. Laser mit Pumpsystem nach einem der vorstehenden Ansprüche, **dadurch gekennzeichnet, dass** das im ersten aktiven Element vorhandene aktive Medium mit einem Dotierstoff aus seltenen Erden wie Ytterbium, Neodym, Erbium, Thulium, Holmium, Samarium dotiert ist, wobei der Dotierstoff bevorzugt Ytterbium ist.

7. Laser mit Pumpsystem nach Anspruch 6, **dadurch gekennzeichnet, dass** der Dotierstoff Ytterbium ist und das primäre Pumpmodul Licht mit einer Wellenlänge um die Absorptionsspitze bei 976 nm emittiert, während das sekundäre Modul Licht mit einer Wellenlänge um die Absorptionsspitze bei 920 nm emittiert.

8. Laser mit Pumpsystem nach einem der vorstehenden Ansprüche, **dadurch gekennzeichnet, dass** die Steuerelektronik des Pumpsystems Eingänge für Steuersignale und optional einen Eingang für ein Fotodiodensignal umfasst, der konfiguriert ist, um das Wachstum des erzeugten Laserpulses zu verfolgen, und zwei Stromausgänge für das primäre und sekundäre Pumpenmodul.

9. Laser mit Pumpsystem nach einem der vorstehenden Ansprüche, **dadurch gekennzeichnet, dass** das sekundäre Pumpmodul angeordnet ist, um zwischen Pumpimpulsen in einem kontinuierlichen Modus bei geringer Leistung von 0,1 W bis 10 W zu arbeiten.

10. Laser mit Pumpsystem nach einem der vorstehenden Ansprüche 1 bis 8, **dadurch gekennzeichnet, dass** das sekundäre Pumpmodul moduliert ist, wobei der Laser eine Fotodiode (5) und Elektronik mit Schaltung für hochempfindliche Messungen im Lock-in-Ansatz aufweist, wobei die Fotodiode von einer Seite des ersten aktiven Elements gekoppelt ist, wodurch eine zeitliche Überwachung der Intensität der übertragenen spontanen Emission ermöglicht wird und somit eine Anpassung der Pumpleistung vom sekundären Modul ermöglicht wird, um wiederholbare Bedingungen sicherzustellen, bevor der Laserpuls erzeugt wird.

11. Laser mit Pumpsystem nach einem der vorstehenden Ansprüche, **dadurch gekennzeichnet, dass** die reflektierenden Elemente dichroitische Spiegel oder in eine aktive Laserfaser eingeschriebene erste und zweite Faser-Bragg-Gitter sind, wobei das erste Faser-Bragg-Gitter (3a) ein Gitter mit hohem Reflexionsgrad über 90 % ist, das zwischen dem Pumpsystem und dem Oszillator installiert ist, während das zweite Faser-Bragg-Gitter (3b) ein Gitter mit geringerem Reflexionsgrad ist, das zwischen einer aktiven Faser des Oszillators und einer aktiven Faser des Verstärkers installiert ist.

12. Verstärkungsgeschalteter einfacher Laser mit Pumpsystem, wobei der Laser konfiguriert ist, um auf Anfrage Laserpulse mit beliebiger Wiederholungsfrequenz zu erzeugen, wobei die erzeugten Impulse eine konstante Dauer und Spitzenleistung aufweisen, wobei der Laser Folgendes umfasst:
- ein aktives Element (2), das zwischen zwei reflektierenden Elementen (3a, 3b) installiert ist und dadurch einen Oszillator zum Erzeugen von Laserpulsen bildet,
- ein einzelnes Pumpmodul (1) mit einem Ausgang, der mit einer Seite des Oszillators gekoppelt oder gespleißt ist, und das zum Pumpen des Oszillators konfiguriert ist,
- ein zusätzliches aktives Element (4) auf der anderen Seite des Oszillators, wobei das zusätzliche aktive Element als Verstärker zum Absorbieren des durch den Oszillator übertragenen restlichen Pumplichts aus dem Pumpmodul fungiert, was eine optimale Effizienz des Lasers gewährleistet,
- wobei das Pumpmodul Steuerelektronik umfasst, und
- das Pumpmodul konfiguriert ist, um eine Ausgangsleistung zu erzeugen, die, zwischen Pumpimpulsen mit hoher Spitzenleistung, mit einer für Fluoreszenzmessung erforderlichen Frequenz in einem Lock-in-Ansatz auf eine niedrige Spitzenpumpleistung moduliert wird, die niedriger als die hohe Spitzenpumpleistung ist, nachdem jeder Laserpuls erzeugt wurde, wobei das Pumpmodul mindestens eine Pumplaserdiode umfasst, wobei die modulierte niedrige Spitzenpumpleistung konfiguriert ist, um durch spontane Emission zwischen Laserpulsen einen konstanten Populationsgrad der Relaxation des aktiven Mediums des Laseroszillators zu gewährleisten.

13. Verfahren zum Erzeugen von Laserpulsen mit konstanter Dauer und Spitzenleistung bei beliebiger Frequenz unter Verwendung des Lasers nach einem der Ansprüche 1 bis 11, wobei das Verfahren die folgenden Schritte umfasst:
- a) die Laserpulse werden basierend auf einem Auslösesignal (7) oder basierend auf einer vordefinierten erforderlichen Sequenz erzeugt, wobei das Auslösesignal ein digitales oder analoges elektrisches Signal ist;
- b) der Laser wird durch Einschalten des sekundären Pumpmoduls, welches das aktive Medium des Lasers in einem kontinuierlichen Modus oder in einem modulierten Modus mit Lock-in-Ansatzmessung pumpt, für die willkürliche Erzeugung von Impulsen vorbereitet, um ein Überschreiten des Schwellenwerts für Laserbetrieb zu verhindern;
- c) wenn die Steuerelektronik das Auslösesignal empfängt, wird das primäre Pumpmodul eingeschaltet, was zu einer deutlichen Erhöhung der Population im Laser führt und als Folge der Relaxationsschwingung einen Laserpuls erzeugt;
- d) das primäre Modul schaltet das Pumpen ab, um sekundäre Relaxationsschwingungen im System zu unterdrücken, wobei das sekundäre Modul das Pumpen des Systems wie in Schritt b) fortsetzt und zusätzlichen Verlust an Population durch spontane Emission verhindert;
- durch Wiederholen der Schritte c) und d) können die Laserpulse auf Anfrage zu beliebigen Zeitpunkten erzeugt werden.

14. Verfahren zum Erzeugen von Laserpulsen nach Anspruch 13, wenn der Laser nach Anspruch 10 verwendet wird, oder wenn der Laser nach Anspruch 11 in Abhängigkeit von Anspruch 10 verwendet wird, wobei die Steuerelektronik die Pumpleistung des sekundären Pumpmoduls zwischen Pumpimpulsen mit höherer Spitzenleistung des primären Pumpmoduls moduliert und den Spitzenwert der modulierten Leistung des sekundären Pumpmoduls basierend auf dem von der Fotodiode (5) bereitgestellten Signal anpasst.

## Revendications

1. Un laser simple doté d'un système de pompe amélioré pour générer des impulsions laser à la demande, à une fréquence de répétition arbitraire, lesdites impulsions générées ayant une durée et une puissance crête constantes, où ledit laser comprend :
- un premier élément actif (2) installé entre deux éléments réfléchissants (3a, 3b), formant ainsi un oscillateur pour la génération d'impulsions laser,
- un système de pompe (1) possédant une sortie étant couplée ou épissée au premier côté de l'oscillateur, qui est configuré pour pomper l'oscillateur et un amplificateur,
où le système de pompe comprend un circuit électronique de commande, des modules de pompage primaire et secondaire et un mélangeur de faisceaux, lesdits modules de pompage primaire et secondaire comprenant chacun au moins une diode laser de pompage, et
où le module de pompage primaire est réglé de façon à générer de courtes impulsions de pompage d'une durée allant jusqu'à 10 µs, et le courant de sortie du module de pompage secondaire est réglé pour être continu ou modulé en fonction du contrôle requis des paramètres des impulsions laser, et dans les deux cas les modules primaire et secondaire sont réglés pour fonctionner à des puissances crête différentes, ledit module secondaire étant réglé pour fonctionner à une puissance crête inférieure à celle du module primaire,
où le courant généré par le module secondaire est configuré pour assurer un niveau d'inversion de population constant du milieu actif de l'oscillateur laser entre les impulsions laser, de façon à diminuer l'effet de relaxation du milieu actif provoqué par une émission spontanée entre les impulsions laser, et
- sur un second côté de l'oscillateur, un deuxième élément actif (4), qui fait office d'amplificateur, est configuré pour absorber la lumière de pompage résiduelle transmise à travers l'oscillateur.

2. Le laser simple doté d'un système de pompe amélioré selon la revendication 1, **caractérisé en ce que** le module primaire basé sur le courant de commande génère les impulsions de pompage courtes d'une puissance crête de 10 W et au-delà, où l'énergie des impulsions de pompage courtes est transférée avec des transitions d'énergie dans le milieu actif à l'impulsion laser générée ; **en ce que** le module secondaire fonctionne à une puissance moyenne faible comprise entre 0,1 W et 10 W, où le courant de sortie du module secondaire peut être continu ou modulé en fonction du contrôle requis des paramètres des impulsions laser, tandis que le courant généré du module secondaire est utilisé pour diminuer l'effet de relaxation du milieu actif provoqué par l'émission spontanée entre les impulsions laser ; et **en ce que** par conséquent le système de pompe avec les deux modules peut passer d'une puissance de pompage élevée générant une impulsion laser, à une puissance de pompage faible après que ladite impulsion laser a été générée.

3. Le laser simple avec système de pompe amélioré selon la revendication 1 ou 2, **caractérisé par le fait que** chacun des modules de pompage comprend une ou plusieurs diodes laser de pompage ayant une longueur d'onde correspondant aux pics d'absorption du milieu actif, où les diodes laser de pompage des deux modules peuvent émettre de la lumière à la même longueur d'onde ou à des longueurs d'onde différentes afin de couvrir différents pics d'absorption du milieu actif.

4. Le laser simple doté d'un système de pompe amélioré selon l'une quelconque des revendications précédentes, **caractérisé en ce que** le nombre de diodes laser de pompage du module primaire dépend de la puissance de sortie requise du laser, où le choix privilégié est une diode laser de pompage dans le module secondaire et une ou plusieurs diodes laser de pompage dans le module primaire.

5. Le laser simple doté d'un système de pompe amélioré selon l'une quelconque des revendications précédentes, **caractérisé par le fait que** le premier élément actif est une fibre optique ou un élément non-fibreux tel qu'une tige de cristal.

6. Le laser simple doté d'un système de pompe amélioré selon l'une quelconque des revendications précédentes, **caractérisé par le fait que** le milieu actif présent dans le premier élément actif est dopé avec un dopant à base de terres rares tel que ytterbium, neodymium, erbium, thulium, holmium, samarium, où le dopant privilégié est l'ytterbium.

7. Le laser simple doté d'un système de pompe amélioré selon la revendication 6, **caractérisé par le fait que** le dopant est l'ytterbium et que le module de pompage primaire émet une lumière ayant une longueur d'onde proche du pic d'absorption de 976 nm, tandis que le module secondaire émet une lumière ayant une longueur d'onde proche du pic d'absorption de 920 nm.

8. Le laser simple doté d'un système de pompe amélioré selon l'une quelconque des revendications qui précèdent, **caractérisé en ce que** le circuit électronique de commande du système de pompe comprend des entrées pour les signaux de commande et facultativement une entrée pour un signal de photodiode, qui sont configurées pour suivre la croissance de l'impulsion laser générée, et deux sorties de courant pour les modules de pompage primaire et secondaire.

9. Le laser simple doté d'un système de pompe amélioré selon l'une quelconque des revendications précédentes, **caractérisé par le fait que** le module de pompage secondaire est réglé de façon à produire des impulsions de pompage intermédiaires en mode continu à une puissance faible comprise entre 0,1 W et 10 W.

10. Le laser simple doté d'un système de pompe amélioré selon l'une quelconque des revendications 1 à 8, **caractérisé en ce que** le module de pompage secondaire est modulé, ledit laser possédant une photodiode (5) et un dispositif électronique avec circuit pour mesures de haute sensibilité dans une approche de détection synchrone, la photodiode étant couplée d'un côté du premier élément actif, permettant ainsi le contrôle de l'intensité de l'émission spontanée transmise en temps réel et autorisant par là-même l'ajustement de la puissance de pompage du module secondaire pour garantir des conditions reproductibles avant que l'impulsion laser soit générée.

11. Le laser simple doté d'un système de pompe amélioré selon l'une quelconque des revendications précédentes, **caractérisé par le fait que** lesdits éléments réfléchissants sont des miroirs dichroïques ou dans une fibre laser active marquée premier et second réseaux de Bragg sur fibre, où le premier réseau de Bragg sur fibre (3a) est un réseau ayant une réflectivité supérieure à 90 %, installé entre le système de pompe et l'oscillateur, tandis que le second réseau de Bragg sur fibre (3b) est un réseau ayant une réflectivité plus faible, installé entre une fibre active de l'oscillateur et une fibre active de l'amplificateur.

12. Un laser simple doté d'un système de pompe amélioré pour générer des impulsions laser à la demande, à une fréquence de répétition arbitraire, lesdites impulsions générées ayant une durée et une puissance crête constantes, où ledit laser comprend :
- un élément actif (2) installé entre deux éléments réfléchissants (3a, 3b), formant ainsi un oscillateur pour la génération d'impulsions laser,
- un module de pompage unique (1) possédant une sortie étant couplée ou épissée à un côté de l'oscillateur, qui est configuré pour pomper l'oscillateur,
- un élément actif supplémentaire (4) sur l'autre côté de l'oscillateur, ledit élément actif supplémentaire fonctionnant comme un amplificateur pour l'absorption de la lumière de pompage résiduelle provenant dudit module de pompage transmise à travers l'oscillateur, ce qui assure l'efficacité optimale du laser,
- où ledit module de pompage comprend un circuit électronique de commande, et
- ledit module de pompage est configuré pour générer un courant de sortie qui est, entre les impulsions de pompage à puissance crête élevée, modulé avec une fréquence nécessaire pour la mesure de la fluorescence dans une approche de détection synchrone à une puissance de pompage à crêtes basses qui est inférieure à ladite puissance de pompage à crêtes élevées après que chaque impulsion laser a été générée, ledit module de pompage comprenant au moins une diode laser de pompage, où la puissance de pompage à crêtes basses modulée est configurée de façon à assurer un niveau d'inversion de population constant du milieu actif de l'oscillateur laser pour compenser la relaxation due à l'émission spontanée entre les impulsions laser.

13. Une méthode pour la génération d'impulsions laser d'une durée et d'une puissance crête constantes à une fréquence arbitraire en utilisant un laser selon l'une quelconque des revendications 1 à 11, où la méthode comprend les étapes suivantes :
- a) les impulsions laser sont générées sur la base d'un signal déclencheur (7) ou sur la base d'une suite d'événements requise prédéfinie, où le signal déclencheur est un signal électrique numérique ou analogique ;
- b) le laser est préparé pour la génération arbitraire d'impulsions en allumant le module de pompage secondaire, qui pompe le milieu actif du laser en mode continu ou en mode modulé avec mesures dans une approche de détection synchrone, afin de prévenir le dépassement du seuil de fonctionnement du laser ;
- c) quand le circuit électronique de commande reçoit le signal déclencheur, le module de pompage primaire est activé, ce qui provoque une augmentation significative de l'inversion de population dans le laser et génère une impulsion laser en conséquence de l'oscillation de relaxation ;
- d) le module primaire désactive le pompage pour supprimer les oscillations de relaxation secondaires dans le système, où le module secondaire continue à pomper le système comme à l'étape b) et prévient la baisse supplémentaire de l'inversion de population provoquée par l'émission spontanée ;
- en répétant les étapes c) et d), les impulsions laser à la demande peuvent être générées à des moments arbitraires.

14. La méthode de génération d'impulsions laser selon la revendication 13, lors de l'utilisation du laser selon la revendication 10 ou lors de l'utilisation du laser selon la revendication 11 quand elle dépend de la revendication 10, où ledit circuit électronique de commande module la puissance de pompage du module de pompage secondaire entre les impulsions de pompage de puissance à crêtes élevées du module de pompage primaire et ajuste la valeur de crête de la puissance modulée du module de pompage secondaire sur la base du signal fourni par la photodiode (5).
